# EUROPÄISCHE PATENTSCHRIFT

(11) **EP 0 715 076 B1**
(45) Veröffentlichungstag und Bekanntmachung des Hinweises auf die Patenterteilung: **06.05.1999**
(21) Anmeldenummer: 94810683.6
(22) Anmeldetag: 02.12.1994
(51) Int. Cl.: F03B 11/00, F03B 11/04

(54) **Belüftung einer Francisturbine durch Luftansaugung**
Air admission for francis turbine through suction
Aération de turbine "francis" par aspiration

(43) Veröffentlichungstag der Anmeldung: 05.06.1996
(73) Patentinhaber: SULZER HYDRO GmbH, D-88183 Ravensburg (DE)
(72) Erfinder: Wührer, Wolfgang, Dr., D-88214 Ravensburg (DE)
(74) Vertreter: Heubeck, Bernhard

(56) Entgegenhaltungen:
- CA-A- 633 655
- CH-A- 324 302
- CH-A- 448 749
- FR-A- 1 080 683
- FR-A- 2 300 909
- GB-A- 850 112
- ESCHER WEYSS MITTEILUNGEN, Bd. 1, 1981 Seiten 37-42, H.GREIN 'schwingungserscheinungen in francisturbinen-ursachen und gegenmassnamen.'

## Beschreibung

Die Erfindung handelt von einer Turbine, insbesondere Francisturbine mit einem Gehäuse, mit einem Leitapparat und mit einem geschlossenen Laufrad, welches zur Begrenzung eines Hauptstroms eine äussere Deckscheibe und eine innere Deckscheibe aufweist, die jeweils in einen Dichtbereich als berührungslose Dichtung mit geringem Radialspiel zum Gehäuse hin ausgebildet sind, um nur geringe Leckageströme vor dem Laufradeintritt zuzulassen, die das Laufrad nicht zur Energieumsetzung durchfliessen.

Wasserturbinen wie Francisturbinen sind in der Regel mit einem Generator zur Stromerzeugung gekoppelt und werden daher mit einer der Netzfrequenz entsprechenden Drehzahl betrieben. Im Auslegungspunkt bei Vollastbetrieb werden dabei recht gute Wirkungsgrade erreicht, während bei Teillast eine schlechtere Anströmung der Laufradschaufeln stattfindet. Durch Verstellen des Leitapparates auf Teillast entsteht am Laufradaustritt ein mitdrehender Drall, der im Zentrum einen "Zopf" erzeugt, welcher unter Umständen Geräusche und Schläge erzeugt. Abhilfe wird häufig in einer kontrollierten forcierten Belüftung geschaffen, damit einerseits eine erwünschte Dämpfung entsteht und andererseits Unterdruck erhalten bleibt. Die eingetragene Luft füllt dabei hinter dem Laufrad einen Teil des Querschnitts auf.

Es gibt heute Systeme (P. Doerfler, Design criteria for air admission systems in Francis turbines, IAHR Symposium, Sept. 1986, Montreal, CANADA) bei denen die Belüftung zentral entlang der Laufradwelle mittels Einblasen von Luft durch die innere Deckscheibe in das Zentrum eines austretenden Strömungsringes erfolgt. Andere Systeme (H. Grein, Schwingungserscheinungen in Francisturbinen - Ursachen und Gegenmassnahmen, Escher Wyss Mitteilungen 1/1981-1/1982) weisen im austretenden Strömungsring ein ortsfestes Mittelrohr mit einem in die Strömung hineinragenden hohlen Dreibein auf, welches mit Oeffnungen versehen ist, um komprimierte Luft der Strömung beizumischen. Eine weitere Möglichkeit, den Anteil an eingeblasener komprimierter Luft herabzusetzen, wird in der Patentschrift CA 633 655 beschrieben. Die äussere Deckscheibe ist über eine obere und eine untere berührungslose Spaltdichtung gegen den Hauptstrom abgedichtet, wobei sich im Raum zwischen den Dichtungen ein Druck einstellen würde, der zwischen den aussen an den beiden Dichtungen anliegenden Drücken liegen würde. Der Raum zwischen der äusseren Deckscheibe und dem Statorgehäuse wird jedoch in fallender Richtung über Rohrleitungen mit einem Mündungsstück verbunden, welches unterhalb der Laufradnabe im Zentrum des Abflussrohres liegt. Bei einer stark rotierenden Strömung ist der Druck an diesem Mündungsstück geringer als an der oberen oder unteren Dichtung der äusseren Deckscheibe. Der Effekt dieser Konstruktion liegt darin, dass die fallenden Rohrleitungen so gross dimensioniert sind, dass einerseits das an beiden Dichtungen eindringende Wasser weitgehend unter Schwerkraft abgeführt werden kann und dass der Druck in der Kammer zwischen den Dichtungen annähernd dem geringeren Druck am Mündungsstück entspricht, um so gegen einen geringeren Druck in der Kammer Luft einzuspeisen. In all diesen Fällen sind Kompressoren zur Erzeugung grösserer Druckluftströme notwendig. Ausserdem stellen Installationen wie ein in die Strömung ragendes Dreibein Strömungswiderstände dar, die auch im Betriebspunkt bei bestem Wirkungsgrad einen Abzug mit sich bringen. Im weiteren sind bei kleineren Turbinen die Kosten für periphere Geräte wie Kompressoren gewöhnlich zu hoch, um noch gerechtfertigt werden zu können.

Aufgabe der Erfindung ist es daher eine forcierte Belüftung zu finden, die einfacher und kostengünstiger ist. Diese Aufgabe wird mit den Kennzeichen des unabhängigen Anspruchs 1 dadurch gelöst, dass bei mindestens einer der Deckscheiben der Dichtbereich zur Strahlpumpe für Aussenluft ausgebildet ist, indem er durch eine in gleicher Richtung anschliessende, jedoch mit grösserem Radialspiel versehene Mischzone fortgesetzt ist, in der einerseits eine Freistrahlexpansion des Leckagestroms stattfindet und in der andererseits Verbindungskanäle zur Aussenluft bestehen, um mit einem zum schürzenförmigen Injektionsstrahl ausgebildeten Leckagestrom Luft anzusaugen und das Wasser-Luftgemisch dem Hauptstrom am Ende der jeweiligen Deckscheibe (6, 7) bei einem Druck beizumischen, der gleich oder höher als der Druck der Aussenluft ist.

Die Erfindung hat den Vorteil, dass sie einfach zu realisieren ist und zwangsläufig funktioniert, ohne von anderen Aggregaten wie Kompressoren abhängig zu sein.

Weitere vorteilhafte Ausführungen ergeben sich aus den abhängigen Ansprüchen 2 bis 10. Die über den Umfang durchgehende Strahlschürze kann durch einen radialen Einstich auf der Gehäuseseite gleichmässig mit Luft versorgt werden. Die Gleichmässigkeit wird erhöht, wenn der Einstich über mehrere Verbindungsöffnungen mit der Aussenluft verbunden ist. Der stufenlose Uebergang an der Deckscheibe von Dichtbereich in die Mischzone bringt dabei bessere Mischresultate als wenn an der Deckscheibe ein Rücksprung zur Mischzone erfolgt. Ein Optimum für Einmischen von Luft in Abhängigkeit vom Verhältnis der Radialspiele wird erreicht, wenn das Radialspiel in der Mischzone um das vier- bis sechsfache grösser als im Dichtbereich ist. Eine an die Mischzone anschliessende Umlenkzone mit sich vergrösserndem Querschnitt hat den Vorteil, dass kein Rückstau und weniger Reibungsverluste zwischen Deckscheibe und Gehäuse eintreten. Eine Schrägschulter gegenüber der Stirnseite der Deckscheibe hat sich als einfache und wirksame Lösung erwiesen, die durch Stauklötze, welche über den Umfang verteilt sind, den Drall des Wasser-Luftgemisches herausnehmen und so eine Pumpwirkung des Gemisch-Rings unterbinden. Die Schrägschulter mit halbem Konuswinkel α zwischen 40 und 60° hat den Vorteil, dass das Umlenken und Beimischen des Wasser-Luftgemisches ohne negative Zusatzeffekte erfolgt.

Diese Art des Luftbeimischens ist nicht auf Francisturbinen beschränkt sondern ist grundsätzlich bei Turbinenrädern mit Deckescheiben und Dichtbereichen möglich. Im folgenden wird die Erfindung anhand von Ausführungsbeispielen beschrieben. Es zeigen:
- Fig. 1: Schematisch einen Ausschnitt aus einer Francisturbine mit einem Laufrad, dessen äusseres Deckband im Dichbereich zu einer Strahlpumpe für Luft ergänzt ist;
- Fig. 2: Schematisch einen vergrösserten Ausschnitt von Figur 1 im Bereich des äusseren Deckbandes; und
- Fig. 3: Schematisch einen Ausschnitt eines inneren Deckbandes mit einem zur Strahlpumpe für Luft ergänzten Dichtbereich.

Die Figuren zeigen Turbinenräder mit Deckscheiben, die einen berührungslosen Dichtbereich zum Gehäuse aufweisen. Durch sprunghaftes Erhöhen des Durchtrittsquerschnitts zur Gehäuseseite im Anschluss an den Dichtbereich in einer in gleicher Richtung anschliessenden Mischzone und durch Verbindungskanäle von der Aussenluft zum Beginn der Mischzone entsteht ein schürzenförmiger Freistrahl in die Mischzone hinein, der Luft ansaugt und einmischt, um das Wasser-Luftgemisch nach Umlenkung einem Hauptstrom an der Laufradaustrittseite zuzuführen. Damit wird Luft hinter dem Dichtbereich eingespeist, die einerseits ohne Hilfsaggregate die Strömung im Hauptstrom hinter dem Laufrad im Teillastbereich beruhigt und die anderseits die Reibungsverluste zwischen Laufrad und Gehäuse verringert.

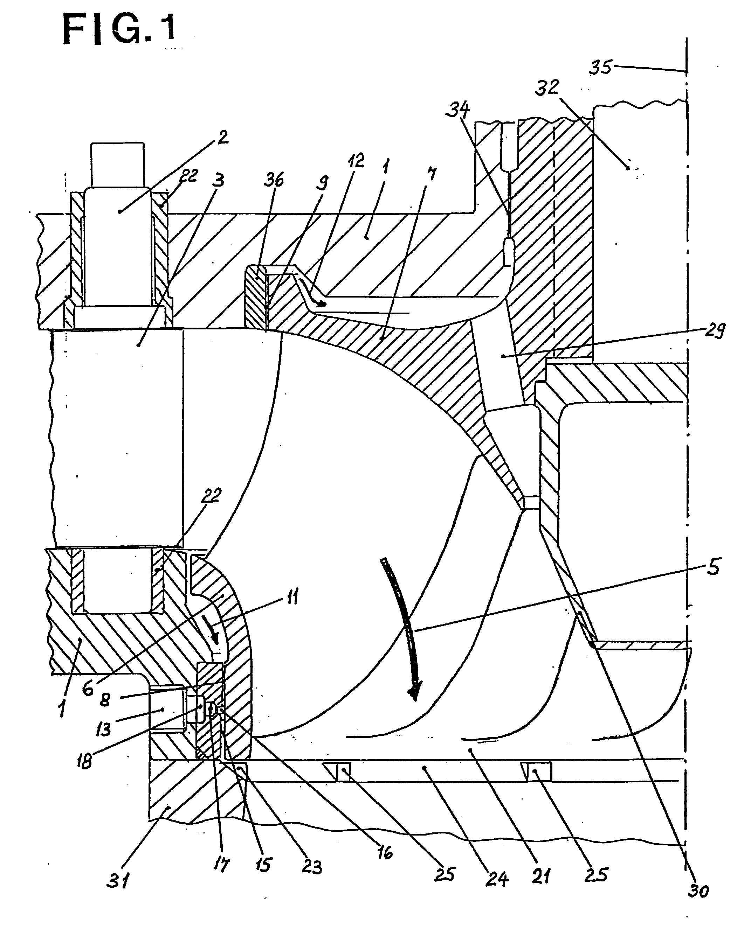

In Figur 1 wird ein Hauptstrom 5 durch eine Turbine mit geteiltem Turbinengehäuse 1 geführt. Ein Leitapparat 2 verändert mit in Führungsbüchsen 22 gelagerten Leitschaufeln 3 den Anstellwinkel und die Menge des in das Laufrad 4 einfliessenden Hauptstroms bei konstanter Drehzahl. Das Laufrad 4 ist auf einer Welle 32 mit einer drehfesten Verzahnung befestigt und durch einen Nabendeckel 30 gehalten, der als hohler Wellenstummel ausgeführt ist, um den Hauptstrom 5 beim Austritt aus dem Laufrad zusätzlich zu führen. Das Laufrad 4 besitzt eine innere Deckscheibe 7 und eine äussere Deckscheibe 6. Die innere Deckscheibe 7 dichtet an ihrer Peripherie berührungslos in einem Dichtbereich 9 gegen einen im Gehäuse 1 eingesetzten Verschleissring 36, wobei ein Leckagestrom entsteht, der den Raum zwischen Deckscheibe 7 und Gehäuse 1 weitgehend ausfüllt und über Verbindungsöffnungen 25 dem Hauptstrom 5 am Nabeldeckel 30 zum Laufradaustritt 21 wieder zuführt. Der Hauptstrom 5 erzeugt bei seinem Austritt 21 aus dem Laufrad an der inneren Deckscheibe zwischen der inneren Deckscheibe 7 und dem Nabeldeckel 30 einen Unterdruck. Der Unterdruck gegenüber Atmosphäre kann am Eintritt der Verbindungsöffnung 29 so hoch sein, dass Luft über eine Labyrinthdichtung 34 zwischen Gehäuse 1 und der Laufradnabe nachgesaugt wird. Durch Schrägstellen der Bohrungen 29 im Drehrichtung kann eine zusätzliche Schöpfwirkung erreicht werden.

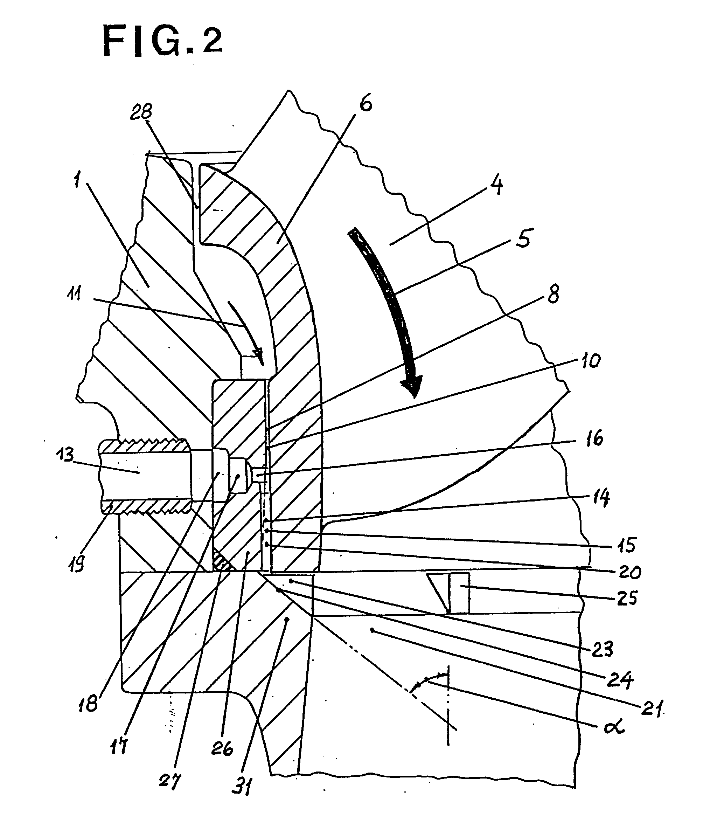

Hinter der äusseren Deckscheibe 6 fliesst entsprechend Figur 1 und 2 ein Leckagestrom 11 vorbei, der zunächst einen Eitnrittspalt 28 durchquert welcher ein Mehrfaches des Radialspiels 10 in einem Dichtbereich 8 aufweist. Die eigentliche Drosselung und Beschleunigung findet beim Eintritt und Durchlaufen der Dichtbereiches 8 statt, der zwischen einem zylindrischen Bereich der Deckscheibe 6 und einem im Gehäuse 1 eingelassenen Einsatz 26 durch ein geringes Radialspiel 10 von beispielsweise 0,4 mm bei einem Durchmesser von 430 mm gekennzeichnet ist. In einer anschliessenden Mischzone 15 ist die zylindrische Fläche der Deckscheibe 6 ohne Unterbrechung fortgesetzt, während das Radialspiel 14 einem Mehrfachen des Radialspiels 10 des Dichtbereiches 8 zum Beispiel 2 mm entspricht. Am Uebergang zwischen Dichtbereich 8 und Mischzone 15 ist am Einsatz 26 ein Ringkanal 16 eingestochen, der über mehr beispielsweise 8 über den Umfang verteilten Verbindungsöffnungen 17 mit einem ringförmigen Verteiler 18 verbunden ist, der seinerseits über eine Ansangleitung 19 mit der Umgebungsluft 13 verbunden ist. Der Einsatz 26 ist von einem am Gehäuse 1 angeschraubten Saugrohr 31 gesichert, wobei eine Weichdichtung 27 zwischen Saugrohr 31 und Gehäuse 1 verpresst wird. Im Saugrohr 31 vergrössert sich der Querschnitt für den Hauptstrom allmählich, um eine möglichst verlustfreie Druckrückgewinnung zu erzielen. Der aus dem Dichtbereich 8 austretende Leckagestrom 11 bildet ähnlich einer Strahlpumpe einen schürzenförmigen Injektionsstrahl der sich entsprechend der Freistrahlexpansion und der durch die von der Schleppwirkung des Laufrades versachte Drehung öffnet und in der Mischzone 15 unter Mitnahme von Luft zum Anliegen kommt. Aus der Mischzone 15 trifft daher ein ungebremstes Wasser-Luftgemisch in einer Umlenkzone 23 auf eine Schrägschulter 24, die das Gemisch radial zum Hauptstrom 5 hin ablenkt. Der halbe Konuswinkel α der Schrägschulter 24 zur Laufradachse 35 ist dabei grösser als 40° bemessen, um einen kurzen Rückführweg ohne Rückstau zu erreichen. Zur Erzeugung einer genügend grossen radialen Eintrittskomponente in den Hauptstrom 5 sind auf der Schrägschulter 24 gleichmässig am Umfang verteilt Stauklötze 25 angebracht, die ein Mitdrehen vom Gemisch 20 in Umfangrichtung innerhalb der Umlenkzone 23 weitgehend verhindern. Dabei reduziert die eingebrachte Luft sowohl in der Mischzone 15 als auch in der Umlenkzone 23 die Schleppleistung der Deckscheibe 6.

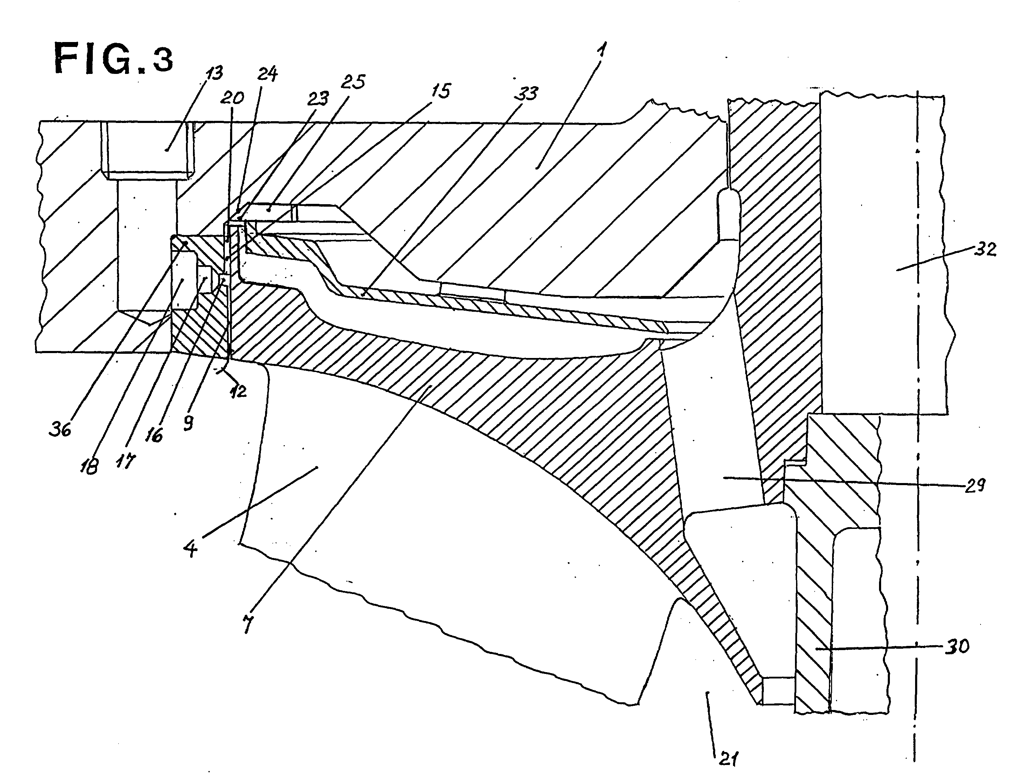

In Figur 3 ist das Ansaugen von Luft für eine innere Deckscheibe 7 gezeigt, bei der ein Wasser-Luftgemisch 20 zu einem Sammelblech 33 radial umgelenkt wird, damit es zu Verbindungsöffnungen 29 in der Laufradnabe fliesst und dem Hauptstrom in der Nähe vom Nabendeckel 30 zugemischt wird. Die Peripherie der inneren Deckscheibe 17 besteht aus einer durchgehenden zylindrischen Fläche während der gegenüberliegende Verschleissring 36 so von innen bearbeitet ist, dass zunächst ein Dichtbereich 9 mit einem engen Radialspiel von beispielsweise 0,4 mm entsteht an den ein Ringkanal 16 und weiter eine Mischzone 15 mit wesentlich grösserem Radialspiel von beispielsweise 2 mm anschliesst. Der Ringkanal 16 ist über mehrere Verbindungsöffnungen 17 und einen Verteilring 18 an die Aussenluft 13 angeschlossen, die für die Stillstandssituation vorteilhaft oberhalb vom Niveau des Unterwassers entnommen wird. Der Leckagestrom 12 verlässt den Dichtbereich 9 als schürzenförmiger Freistahl, der Luft im Mischbereich 15 einmischt und als Wasser-Luftgemisch auf eine Schrägschulter 24 im Gehäuse 1 aufprallt. Eine sich erweiternde Umlenkzone 23 wird durch die Schrägschulter 24, durch den stirnseitigen Rand der inneren Deckscheibe 7 und durch den Rand des Sammelblechs 33 begrenzt. Auf dem Rand des Sammelblechs 33 sind über den Umfang verteilt Stauklötze 25 angebracht, die die Umlenkung in die Radiale verbessern. Mit diesem schürzenförmigen Injektor besteht daher allgemein die Möglichkeit Aussenluft 13 gegen einen Druck der gleich dem Aussendruck oder höher ist einzubringen und im speziellen Fall der inneren Deckscheibe 7, die Möglichkeit diese Aussenluft und den Leckagestrom 12 an der Rückseite der Deckscheibe vorbei gezielt zu den Verbindungsöffnungen 29 zu bringen. Allfälliges Spritzwasser zwischen Sammelblech 33 und Deckscheibe 7 wird durch die Drehung der Deckscheibe herauszentrifugiert und in der Umlenkzone 23 beigemischt.

Zwischen Deckscheibe und Sammelblech stellt sich in radialer Richtung ein Gleichgewichtszustand für den Wasseranteil ein.

## Patentansprüche

1. Turbine, insbesondere Francisturbine mit einem Gehäuse (1), mit einem Leitapparat (2) und mit einem geschlossenen Laufrad (4), welches zur Begrenzung eines Hauptstroms (5) eine äussere Deckscheibe (6) und eine innere Deckscheibe (7) aufweist, die jeweils in einem Dichtbereich (8,9) als berührungslose Dichtung mit geringem Radialspiel (10) zum Gehäuse (1) hin ausgebildet sind, um nur geringe Leckageströme (11,12) vor dem Laufradeintritt zuzulassen, die das Laufrad (4) nicht zur Energieumsetzung durchfliessen, dadurch gekennzeichnet dass bei mindestens einer der Deckscheiben (6,7) der Dichtbereich (8, 9) zur Strahlpumpe für Aussenluft (13) ausgebildet ist, wobei der Dichtspalt durch eine in gleicher Richtung anschliessende, jedoch mit grösserem Radialspiel (14) versehene Mischzone (15) fortgesetzt ist, in der einerseits eine Freistrahlexpansion des Leckagestroms (11,12) stattfindet und in der andererseits Verbindungskanäle (16,17,18,19) zur Aussenluft (13) bestehen, um mit einem zum schürzenförmigen Injektionsstrahl ausgebildeten Leckagestrom Luft anzusaugen und das Wasser-Luftgemisch (20) dem Hauptstrom am Ende der jeweiligen Deckscheibe (6, 7) bei einem Druck beizumischen, der gleich oder höher als der Druck der Aussenluft ist.

2. Turbine nach Anspruch 1, dadurch gekennzeichnet, dass ein Dichtbereich (8,9) am Uebergang zur Mischzone (15) einen ringförmigen radialen Einstich (16) auf der Gehäuseseite aufweist, in den mehrere Verbindungsöffnungen (17) einmünden, um die Luft gleichmässig über den Umfang verteilt dem schürzenförmigen Injektionsstrahl zuzuführen.

3. Turbine nach Anspruch 2, dadurch gekennzeichnet, das die Anzahl der Verbindungsöffnungen (17), die in den ringförmigen Einstich (16) einmünden, vier oder grösser ist.

4. Turbine nach einem der Ansprüche 1 bis 3, dadurch gekennzeichnet, dass an einer Deckscheibe (6,7) im Längsschnitt betrachtet die Kontur des Dichtbereiches (8,9) und der Mischzone (15) auf einem durchgehenden Geradenabschnitt liegt.

5. Turbine nach einem der Ansprüche 1 bis 4, dadurch gekennzeichnet, dass in der Mischzone (15) ein radiales Spiel (14) besteht, welches dem Vier- bis Sechsfachen des Radialspiels (10) des Dichtbereiches (8,9) entspricht.

6. Turbine nach einem der Anprüche 1 bis 5, dadurch gekennzeichnet, dass an die Mischzone (15) eine Umlenkzone (23) anschliesst, welche in Durchflussrichtung für das Wasser-Luftgemisch (20) einen sich vergrössern den Querschnitt aufweist, um das Gemisch ohne Rückstau zum Hauptstrom (5) umzulenken.

7. Turbine nach Anspruch 6, dadurch gekennzeichnet, dass die Umlenkzone (23) auf der Gehäuseseite durch eine Schrägschulter (24) und auf der Laufradseite durch eine radial verlaufende Stirnfläche der Deckscheibe (6,7) begrenzt ist.

8. Turbine nach Anspruch 7, dadurch gekennzeichnet, dass die Schrägschulter (24) zur Laufradachse (35) einem Konusausschnitt mit einem halben Konuswinkel α grösser 40° entspricht.

9. Turbine nach einem der Anprüche 6 bis 8, dadurch gekennzeichnet, dass in der Umlenkzone (23) am Umfang mehrere Stauklötze (25) angebracht sind, die entsprechend ihrem Teilungsabstand die Rotation des mit dem Laufrad (4) in Drehrichtung mitdrehenden Wasser-Luftgemisches (20) begrenzen und es radial zur Laufradachse (35) hin ablenken.

10. Turbine nach Anspruch 9, dadurch gekennzeichnet, dass die Anzahl der Stauklötze (25) sechs oder mehr beträgt.

11. Verfahren für eine Turbine mit einem Laufrad (4) mit Deckscheibe (6,7) um Aussenluft (13) einem Hauptstrom (5) am Laufradaustritt (21) zuzuführen, dadurch gekennzeichnet, dass ein Leckagestrom (11,12), der vor dem Laufradeintritt abzweigt und entlang der Deckscheibe durch einen berührungslosen Dichtbereich (8,9) mit Radialspiel (10) geführt wird, als Treibstrahl mit Freistrahlexpansion in eine an den Dichtbereich anschliessende Mischzone mit grösserem Radialspiel (14) zum Ansaugen und Mitfördern von Aussenluft verwendet wird, um das so entstandene Wasser-Luftgemisch (20) in einem sich erweiternden und an die Mischzone (15) anschliessenden Querschnitt umzulenken und dem Hauptstrom (5) am Ende der jeweiligen Deckscheibe (6, 9) bei einem Druck zuzumischen, der gleich oder höher als Druck der Aussenluft ist.

12. Verfahren nach Anspruch 11 für eine Turbine mit verstellbarem Leitapparat(2), dadurch gekennzeichnet, dass die angesaugte Luft (13) eine Drosselstelle durchläuft, deren Widerstand sich mit zunehmender Schliessung des Leitapparates verringert, um bei Teillast eine grössere Luftmenge als bei Vollast dem Hauptstrom am Laufradaustritt beizumischen.

## Claims

1. Turbine, in particular Francis turbine comprising a housing (1), a guide apparatus (2) and a closed rotor wheel (4) having an external cover disk (6) and an inner cover disk (7) for bounding a main flow (5), each of which is formed in a respective sealing region (8, 9) as a contactless seal with a small radial clearance (10) towards the housing (1) in order to permit only small leakage flows (11, 12j ahead of the rotor wheel inlet which do not flow through the rotor wheel (4) for energy conversion, characterised in that the sealing region (8, 9) of at least one of the cover disks (6, 7) is formed as a jet pump for external air (13), with the sealing gap being continued by a mixing zone (15) adjoining it in the same direction but provided with a larger radial clearance (14), and in which a free jet expansion of the leakage current (11, 12) takes place, on the one hand, and connection channels (16, 17, 18, 19) to the external air (13) exist, on the other hand, in order to suck in air with a leakage current formed into an apron-like injection jet and to mix the water-air mixture (20) into the main flow at the end of the respective cover disc (6, 7) at a pressure which is the same as or higher than the pressure of the external air.

2. Turbine in accordance with claim 1, characterised in that a sealing region (8,9) has a ring-shaped, radial recess (16) on the housing side at the transition to the mixing zone (15) into which a plurality of connection openings (17) open out in order to supply the air to the apron-shaped injection jet distributed uniformly over the periphery.

3. Turbine in accordance with claim 2, characterised in that the number of connection openings (17) opening out into the ring-shaped recess (16) is four or more.

4. Turbine in accordance with one of the claims 1 to 3, characterised in that on one cover disk (6, 7) viewed in longitudinal section the contour of the sealing region (8, 9) and of the mixing zone (15) lies on a continuous straight section.

5. Turbine in accordance with one of the claims 1 to 4, characterised in that in the mixing zone (15) a radial clearance (14) exists corresponding to four to six times the radial clearance (10) of the sealing region (8, 9).

6. Turbine in accordance with one of the claims 1 to 5, characterised in that a deflection zone (23) adjoins the mixing zone (15) and has an expanding cross-section in the through-flow direction for the water-air mixture (20) in order to deflect the mixture to the main flow (5) without back pressure.

7. Turbine in accordance with claim 6, characterised in that the deflection zone (23) is bounded on the housing side by an inclined shoulder (24) and on the rotor wheel side by a radially extending end face of the cover disk (6, 7).

8. Turbine in accordance with claim 7, characterised in that the inclined shoulder (24) corresponds relative to the rotor wheel axis (35) to a cone section with a half cone angle α larger than 40 degrees.

9. Turbine in accordance with one of the claims 6 to 8, characterised in that a plurality of stagnation blocks (25) are mounted at the periphery in the deflection zone (23) which, according to their pitch, limit the rotation of the water-air mixture (20) co-rotating with the rotor wheel (4) in the direction of rotation and deflect this mixture radially towards the rotor wheel axis (35).

10. Turbine in accordance with claim 9, characterised in that the number of stagnation blocks (25) amounts to six or more.

11. Method for a turbine having a rotor wheel (4) with cover disk (6, 7) for supplying external air (13) to a main flow (5) at the rotor wheel outlet (21), characterised in that a leakage flow (11,12), which branches off prior to the rotor wheel inlet and is guided along the cover disk through a contactless sealing region (8, 9) with radial clearance (10), is used as a propulsion jet with free jet expansion into a mixing zone with larger radial clearance (14) adjoining the sealing region for sucking in and conveying the external air in order to deflect the so arising water-air mixture (20) in an expanding cross-section adjoining the mixing zone (15) and mix it with the main flow (5) at the end of the respective cover disc (6, 9) at a pressure which is the same as or higher than the pressure of the external air.

12. Method in accordance with claim 11 for a turbine with adjustable guide apparatus (2), characterised in that the sucked-in air (13) passes through a restriction position, the resistance of which reduces with increasing closure of the guide apparatus in order to mix a larger amount of air into the main flow at the rotor wheel outlet at partial load than at full load.

## Revendications

1. Turbine, notamment turbine Francis avec une enveloppe (1), avec un appareil conducteur (2) et avec une roue mobile fermée (4) qui, pour la délimitation d'un courant principal (5), présente un disque de recouvrement extérieur (6) et un disque de recouvrement intérieur (7) qui sont réalisés respectivement dans une zone d'étanchéité (8, 9) comme gamiture d'étanchéité sans contact avec un petit jeu radial (10) vers l'enveloppe (1) pour permettre seulement des courants de fuite réduits (11, 12) avant l'entrée de la roue mobile qui ne traversent pas la roue mobile (4) en vue d'une transformation en énergie, caractérisée en ce que dans au moins l'un des disques de recouvrement (6, 7), la zone d'étanchéité (8, 9) est réalisée en pompe à jet pour de l'air extérieur (13), où la fente d'étanchéité est prolongée par une zone de mélange (15) faisant suite dans la même direction, cependant pourvue d'un plus grand jeu radial (14), dans laquelle a lieu, d'une part, une expansion de jet libre du courant de fuite (11, 12) et dans laquelle existent, d'autre part, des canaux de liaison (16, 17, 18, 19) vers l'air extérieur (13) pour aspirer l'air avec un courant de fuite réalisé en jet d'injection en forme de tablier et pour ajouter le mélange eau-air (20) au courant principal à la fin du disque de recouvrement respectif (6, 7) à une pression qui est égale ou supérieure à la pression de l'air extérieur.

2. Turbine selon la revendication 1, caractérisé en ce qu'une zone d'étanchéité (8, 9) présente à la transition vers la zone de mélange (15) une encoche radiale annulaire (16) sur le côté d'enveloppe dans laquelle débouchent plusieurs ouvertures de liaison (16) pour amener l'air, réparti uniformément sur le pourtour, au jet d'injection en forme de tablier.

3. Turbine selon la revendication 2, caractérisée en ce que le nombre des ouvertures de liaison (17) qui débouchent dans l'encoche annulaire (16) est de quatre ou plus grand.

4. Turbine selon l'une des revendications 1 à 3, caractérisée en ce que, sur un disque de recouvrement (6, 7), en regardant en coupe longitudinale, le contour de la zone d'étanchéité (8, 9) et de la zone de mélange (15) se situe sur une section de droite continue.

5. Turbine selon l'une des revendications 1 à 4, caractérisée en ce qu'il existe dans la zone de mélange (15) un jeu radial (14) qui représente quatre à six fois le jeu radial (10) de la zone d'étanchéité (8, 9).

6. Turbine selon l'une des revendications 1 à 5, caractérisée en ce que la zone de mélange (15) est suivie par une zone de déviation (23) qui présente dans la direction d'écoulement pour le mélange eau-air (20) une section transversale qui s'agrandit pour dévier le mélange sans retenue vers le courant principal (5).

7. Turbine selon la revendication 6, caractérisée en ce que la zone de déviation (23) est délimitée sur le côté de l'enveloppe par un épaulement incliné (24) et sur le côté de la roue mobile par une surface frontale s'étendant radialement du disque de recouvrement (6, 7).

8. Turbine selon la revendication 7, caractérisée en ce que l'épaulement incliné (24) vers l'axe de roue mobile (35) correspond à une section de cône présentant un demi angle de cône α supérieur à 40°.

9. Turbine selon l'une des revendications 6 à 8, caractérisée en ce que sont disposés dans la zone de déviation (23) au pourtour plusieurs blocs de refoulement (25) qui, conformément à leur écart de division, délimitent la rotation du mélange eau-air (20) tournant avec la roue mobile (4) dans la direction de rotation et le dévient radialement vers l'axe de roue mobile (35).

10. Turbine selon la revendication 9, caractérisée en ce que le nombre des blocs de refoulement (25) est de six ou plus.

11. Procédé pour une turbine avec une roue mobile (4) avec un disque de recouvrement (6, 7) pour amener l'air extérieur (13) à un courant principal (5) à la sortie de roue mobile (21), caractérisé en ce qu'un courant de fuite (11, 12) qui part avant l'entrée de roue mobile et qui est guidé le long du disque de recouvrement à travers une zone d'étanchéité sans contact (8, 9) avec un jeu radial (10), est utilisé comme jet d'entraînement avec une expansion de jet libre dans une zone de mélange faisant suite à la zone d'étanchéité, avec un plus grand jeu radial (14) pour aspirer et convoyer l'air extérieur pour dévier le mélange eau-air (20) ainsi produit dans une section transversale qui s'élargit et qui fait suite à la zone de mélange (15) et pour l'ajouter au courant principal (5) à l'extrémité du disque de recouvrement respectif (6, 9) à une pression qui est égale ou supérieure à la pression de l'air extérieur.

12. Procédé selon la revendication 11 pour une turbine avec un appareil conducteur réglable (2), caractérisé en ce que l'air aspiré (13) passe à travers un emplacement d'étranglement dont la résistance diminue lors d'une fermeture progressive de l'appareil conducteur pour ajouter, en charge partielle, une plus grande quantité d'air que lors de la charge pleine au courant principal à la sortie de la roue mobile.
